# EUROPEAN PATENT SPECIFICATION

(11) **EP 2 001 095 B1**
(45) Date of publication and mention of the grant of the patent: **14.05.2014**
(21) Application number: 08010203.1
(22) Date of filing: 04.06.2008
(51) Int. Cl.: H02G 15/22, H02G 15/32

(54) **Bushing for generator**
Buchse für Generator
Traversée pour générateur

(30) Priority: 04.06.2007 JP 2007148119
(43) Date of publication of application: 10.12.2008
(73) Proprietor: Hitachi Ltd., Chiyoda-ku Tokyo 100-8280 (JP)
(72) Inventor: Kozaki, Tatsuro, Tokyo 100-8220 (JP); Sato, Hiroyuki, Tokyo 100-8220 (JP); Takahashi, Kazuhiko, Tokyo 100-8220 (JP)
(74) Representative: Strehl Schübel-Hopf & Partner

(56) References cited:
- GB-A- 771 770
- US-A- 2 742 582
- US-A- 5 374 866

## Description

### FIELD OF THE INVENTION

The present invention relates to a bushing, particularly a bushing which allows electric current and cooling gas to flow through a containment vessel to a generator main unit placed in the containment vessel, and a generator with this bushing. The bushing according to the present invention can be applied to many types of electric equipment for large currents, such as generators used in electric power stations and transformers or condensers used in transforming stations.

### BACKGROUND OF THE INVENTION

In an electric power station, when a generator main unit is placed in an atmosphere of cooling gas such as hydrogen gas, which is confined by a containment vessel, electric current path must penetrate the wall of the containment vessel in order to lead the electric power generated by the generator to an off-site power system. At the penetration part of the electric current path, an insulated bushing is used to prevent the power line current from leaking through the containment vessel.

The bushing should be easy to assemble, easy to service, and be able to absorb expansion or contraction with temperature change of peripheral devices around the bushing. Also the bushing and the devices around it should be compact. For this reason, the structure around the bushing is complicated and the total of electric contact resistances between components in the peripheral devices is large; for example, if currents of tens of kiloamperes flow, joule heat of tens of kilowatts is generated.

In order to suppress the temperature increase of the devices around the bushing and maintain the soundness of the bushing and the devices, the bushing is designed to flow the cooling gas such as hydrogen gas through it and cool itself down.

However, a satisfactory cooling effect cannot be achieved simply by flowing the cooling gas through the bushing. One approach to this problem is to mount many radiating fins on a terminal, which connects leads to link the bushing and other electric equipment and where temperature tends to rise more in the bushing and the devices (for example, see JP-A HEI 10-283860(abstract)).

In a bushing including a conductive conduit tube, a conductive lead tube and a terminal for connecting the conduit tube and the lead tube, when the terminal has a bend, the inner corner of the bend tends to be higher in temperature than other parts. If the temperature of the inner corner of the bend is kept low, it enables a larger current to flow without increasing the sizes of the bushing, the devices around it, and the generator itself.

In JP-A HEI 10-283860, no means to improve the cooling effect at the bend is described for a bushing which has a terminal with a bend.

An object of the present invention is to provide a bushing which is, for a terminal with a bend, designed to improve the effect to cool the inner corner of the bend, and to provide a generator including the same.

US 2 742 582 A discloses a bushing and a generator with the features in the pre-characterizing portions of the independent claims.

### SUMMARY OF THE INVENTION

The present invention is defined in the independent claims. Further advantageous features are set out in the dependent claims.

As a cooling means for forced cooling of the inner corner of the terminal, it is preferable that a guide be provided in the terminal to concentrate the cooling gas flowing in the terminal on the inner corner of the bend. It is also preferable that a radiating fin be provided on an inner or outer surface of the inner corner of the bend of the terminal. It is also preferable that a mechanism be provided to make the cooling gas hit outside of the inner corner of the terminal. It is possible to use a combination of these means.

According to the present invention, a larger current can flow through the bushing than that in conventional cooling structures, even if the bushing size is unchanged. This means that a larger current can flow without increasing the sizes of the bushing, devices around the bushing, and generator itself.

### BRIEF DESCRIPTION OF THE DRAWINGS

Fig. 1 shows a cooling gas flow velocity distribution and a temperature distribution, in which a guide vane is attached in the generator's inside terminal;
Fig. 2 shows a structure of the inside terminal with a guide vane attached in it by casting etc.;
Fig. 3 shows a structure of the inside terminal with a guide vane attached in it by using a vane holder;
Fig. 4 shows a structure of the inside terminal with a guide vane attached in it by using an L-shaped vane holder;
Fig. 5 shows a structure of the inside terminal with a guide vane attached in it by using a flat-shaped vane holder;
Fig. 6 shows a structure of the inside terminal with a guide vane and an auxiliary guide vane attached in it by using a flat-shaped vane holder;
Fig. 7 shows a structure of the inside terminal with a radiating fin attached in it;
Fig. 8 shows a structure how cooling gas is led from the blower to the inner corner of the inside terminal through a blower tube;
Fig. 9 shows a structure where a cover is attached to the bushing;
Fig. 10 shows a structure how discharged cooling gas from the bushing is led to the outer surface of the inner corner of the inside terminal;
Fig. 11 shows a structure of the inside terminal with a radiating fin attached outside of it;
Fig. 12 shows a structure of the bushing and devices around it in the comparative example 1;
Fig. 13 shows a current distribution in the inside terminal in the comparative example 1;
Fig. 14 shows a cooling gas flow velocity distribution in the inside terminal in the comparative example 1;
Fig. 15 shows a temperature distribution in the inside terminal in the comparative example 1;
Fig. 16 is an assembly drawing of the inside terminal in the comparative example 1;
Fig. 17 is an assembly drawing of the inside terminal (2-fraction structure) in the comparative example 2; and
Fig. 18 is an assembly drawing of the inside terminal (3-fraction structure) in the comparative example 3.

### DETAILED DESCRIPTION OF THE PREFERRED EMBODIMENTS

Some comparative examples which were examined in the process of making the present invention will be explained before describing the preferred embodiments of the present invention below.

### Comparative Example 1

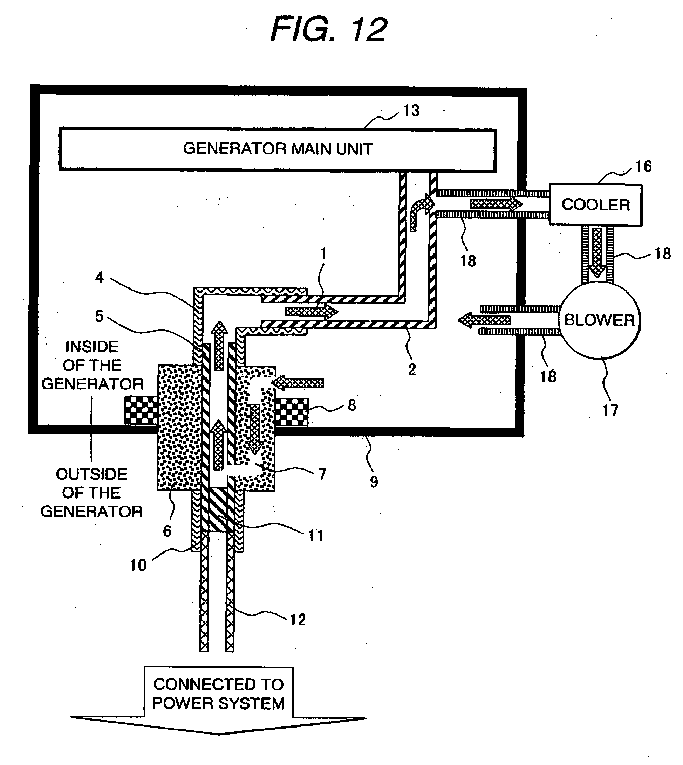

Fig. 12 shows a structure of a general bushing for large currents and devices around it. For electric current to flow through a containment vessel 9 housing a generator main unit 13, the bushing includes a conduit tube 5 through which current flows, an inside lead tube 2 which leads electric power from the generator main unit 13 or a motor into the conduit tube 5, an inside terminal 4 which connects the conduit tube 5 and the inside lead tube 2 inside the containment vessel 9, an outside lead tube 12 which feeds electric power to a station load or power system outside the containment vessel 9, and an outside terminal 10 which connects the conduit tube 5 and the outside lead tube 12 outside the containment vessel 9. It also includes an insulation member 6 and an insulation member holder 8 which fix and isolate the conduit tube 5 in the containment vessel 9.

In order to remove joule heat generated in the conduit tube 5 etc. , a cooling mechanism for the bushing is so structured that cooling gas 1, such as hydrogen gas, cooled by a cooler 16 is circulated through a blower duct 18 made of insulation material, a ventilation hole 7 in the insulation member 6, the conduit tube 5, the inside terminal 4 and the inside lead tube 2 with a blower17. A plug 11 is provided at the bottom of the conduit tube 5 to prevent the cooling gas 1 from flowing out of the containment vessel 9. The inside terminal 4 is bent for convenience in layout, covered by an insulation member for thermally insulation.

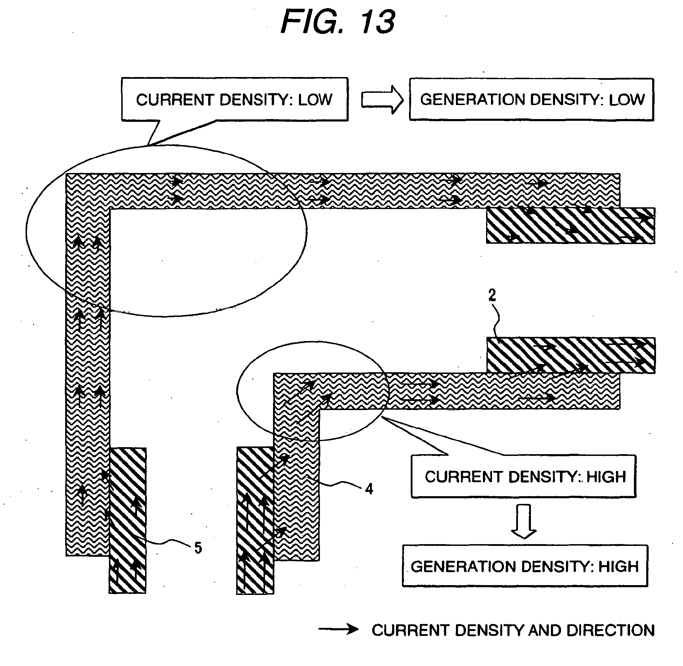

Fig. 13 shows a current distribution in the vertical section of the inside terminal 4 which electromagnetic field analysis revealed. As shown in the current distribution (instantaneous values) in Fig. 13, the current is found to concentrate on the periphery of the inner corner of the inside terminal 4 where it is bent. This is because current has a tendency to concentrate in a shorter route and, in the case of alternating current, concentrate on the periphery of the route (conductor) due to a conductor skin effect. Furthermore, since joule heat generation density is in proportion to the square of current density, joule heat concentrates on the periphery of the inner corner of the inside terminal 4 as well as in the case of current.

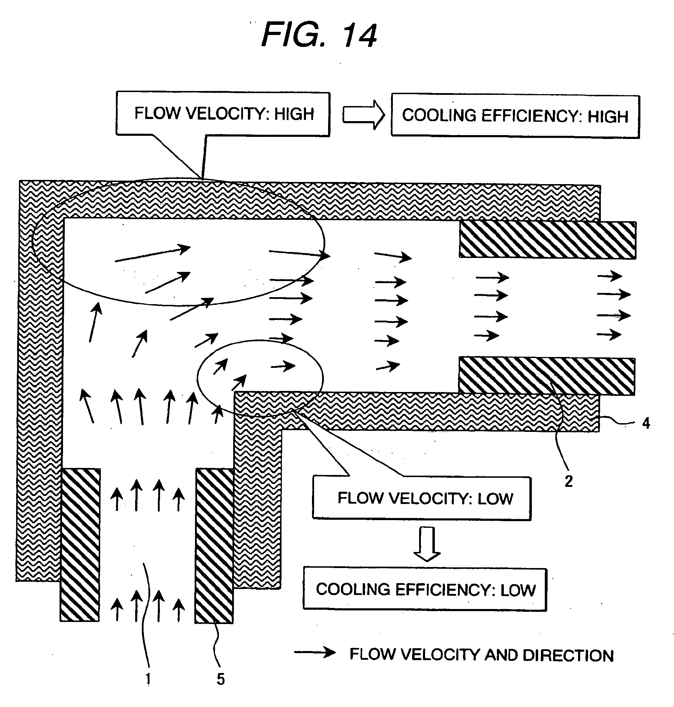

Fig. 14 shows a flow velocity distribution of the cooling gas 1 in the vertical section of the inside terminal 4 which thermal hydraulics analysis has revealed. As shown in Fig. 14, the cooling gas 1 is found to flow through the bent terminal while concentrating on the outer corner side in the latter half of the bend, namely on the downstream side close to the bend. The reason is that the direction of the gas flow cannot change immediately at the bend because of the gas's inertia. On the other hand, the coefficient of heat transfer between the cooling gas 1 and the wall of the terminal 4 is almost proportional to the flow velocity of the cooling gas 1. Therefore, the cooling efficiency is higher at the outer corner side than at the inner corner side.

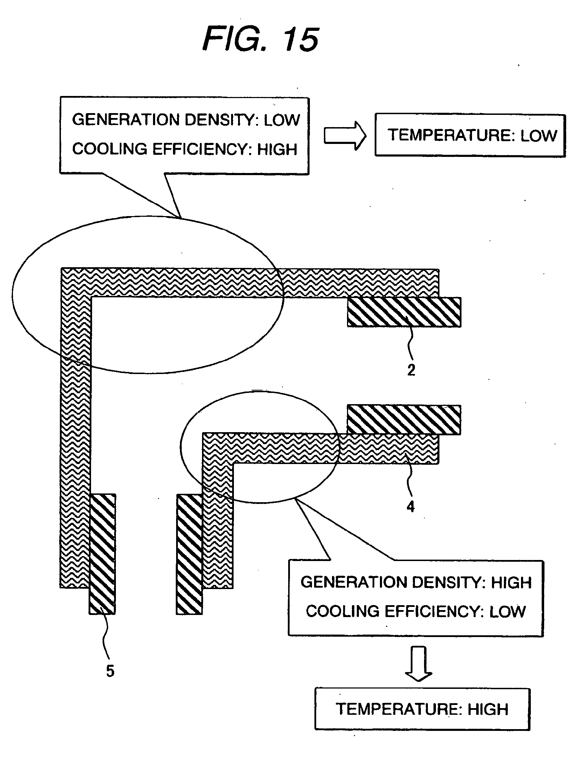

Fig. 15 shows a temperature distribution in the vertical section of the inside terminal 4 which thermal hydraulics analysis has revealed. As shown in Fig. 15, it is found that, in the outer corner (periphery side) of the bend of the inside terminal 4, less Joule heat is generated, cooling efficiency is high and thus the temperatures are low, while, in its inner corner, more heat is generated, cooling efficiency is low and therefore the temperatures are high. The maximum temperature is a constrained condition in bushing design.

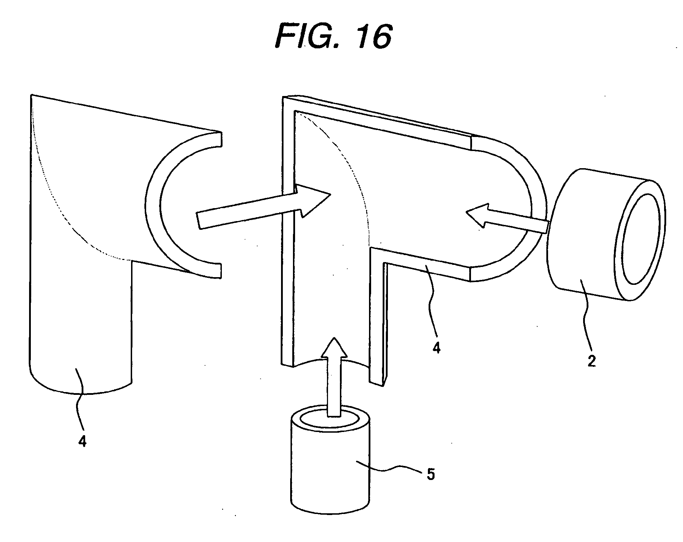

Fig. 16 is an assembly drawing of the inside terminal 4 of the comparative example 1. In the inside terminal 4, electric contact resistance needs to be decreased between the inside terminal 4 and the conduit tube 5 or the inside lead tube 2 in order to reduce joule heat generation and prevent temperature increase at the areas where the inside terminal 4 contacts them. For this reason, in the comparative example 1, the inside terminal 4 has a split structure, namely it consists of two parts as shown in Fig. 16, and these two parts are joined by fastening with bolts or the like so that the parts come into close contact with each other with increased pressure between them.

### Comparative Example 2

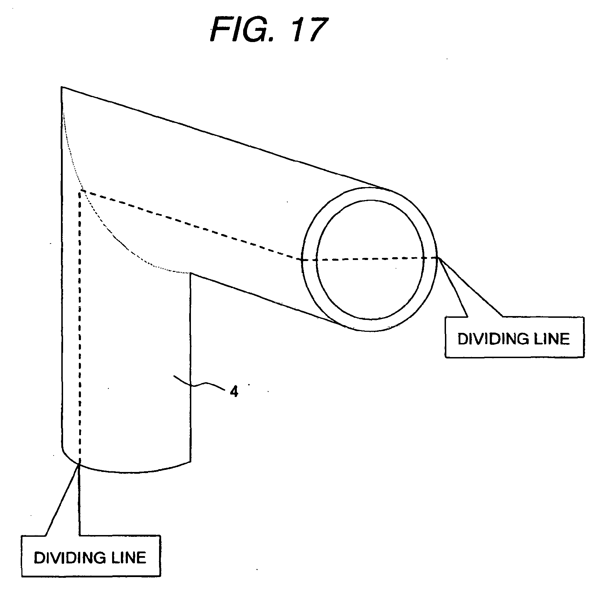

Fig. 17 shows another example of an inside terminal. This inside terminal can be divided into two fractions along the broken line.

### Comparative Example 3

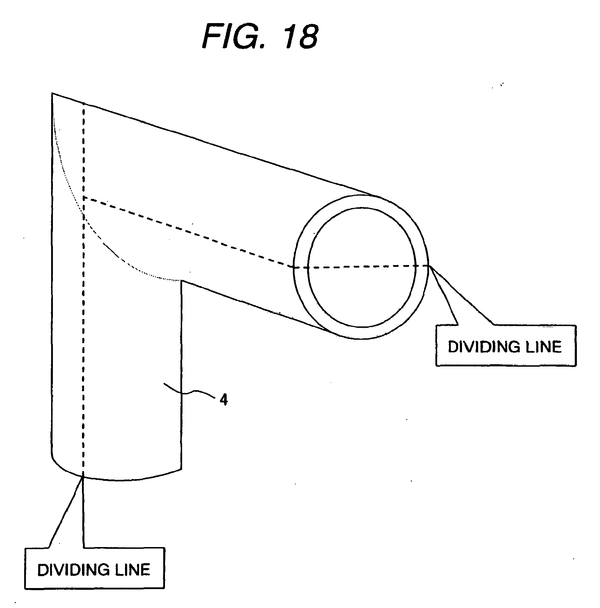

Fig. 18 also shows another example of an inside terminal. This inside terminal can be divided into three fractions along the broken line.

### First Embodiment

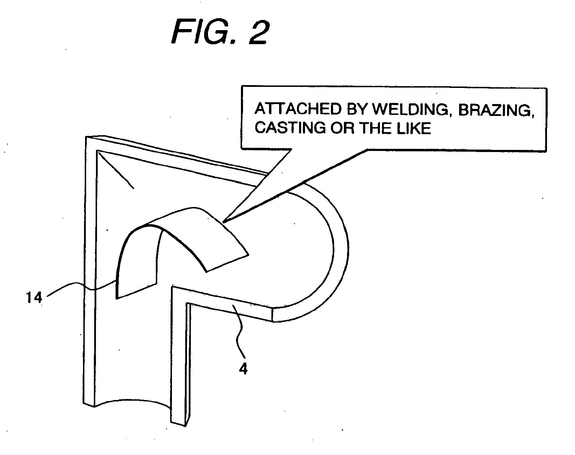

Fig. 2 shows a structure of an inside terminal 4 with a guide vane 14 in it. The guide vane 14 is installed in the inside terminal 4 which has the same structure as in the comparative example 1 except for the guide vane 14. In this embodiment, the guide vane 14 can be attached by welding, alloy brazing, casting or the like since the inside terminal 4 has a split structure.

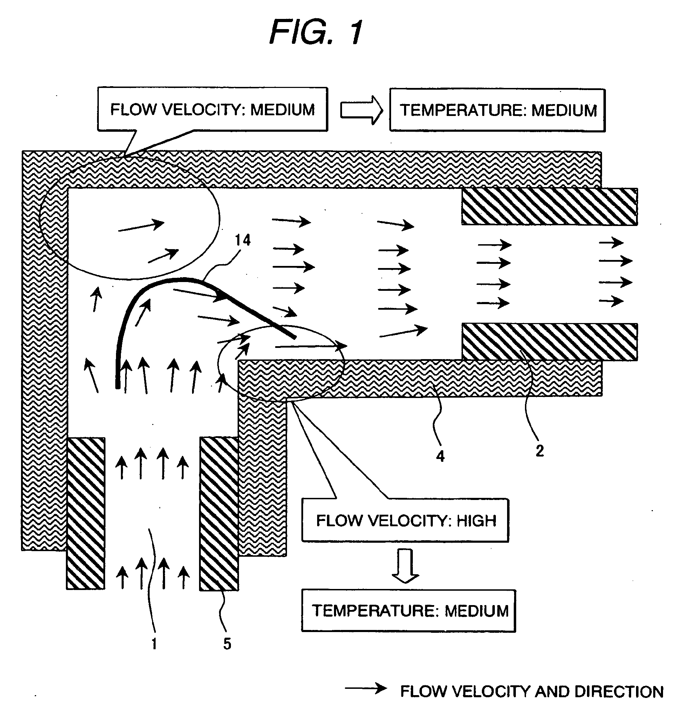

Fig. 1 shows a cooling gas flow velocity distribution in the vertical section of the inside terminal 4 with the guide vane 14 installed in it, which thermal hydraulics analysis has revealed. The guide vane 14 causes the inflowing cooling gas 1 from the conduit tube 5 to concentrate around the inner corner of the inside terminal 4 and flow at higher velocity. Consequently, the heat generated at the inner corner of the inside terminal 4 is efficiently removed and the temperature of the inner corner area is decreased. As the temperature decreases, the terminal's electric resistance becomes smaller and heat generation is reduced, resulting in further lowering of the temperature.

### Second Embodiment

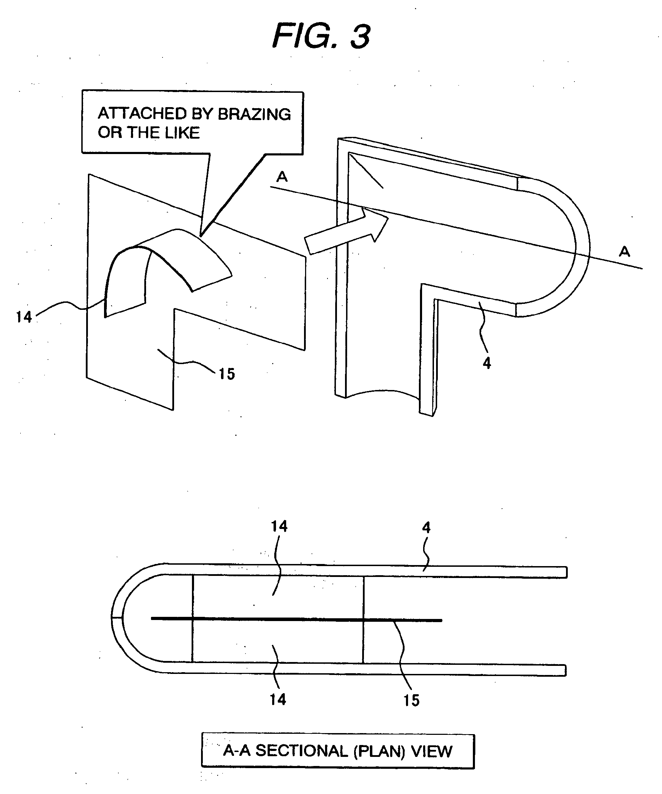

Fig. 3 shows a method of installing the guide vane 14. In this embodiment, the guide vane 14 is attached to a guide vane holder 15 in addition to the same terminal 4 as in the comparative example 1. The guide vane 14 and the guide vane holder 15 are sandwiched and fixed between the constituent parts of the inside terminal 4. Consequently, the same effect can be achieved as in the first embodiment.

### Third Embodiment

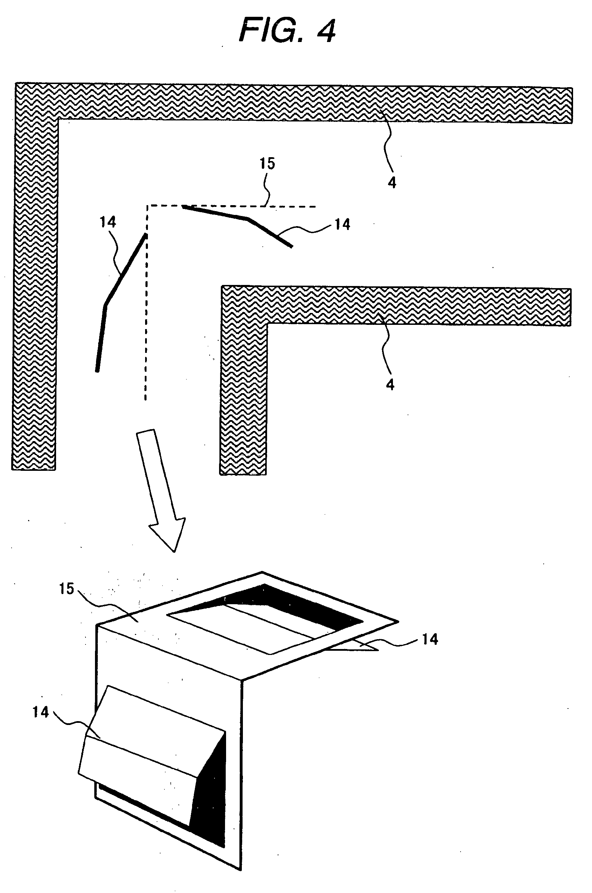

Fig. 4 shows another structure of installing the guide vane 14. The guide vane 14 is formed in an L-shaped guide vane holder 15 by cutting and bending a plate for the holder 15 in addition to the same terminal 4 as in the comparative example 2. The guide vane 14 and the guide vane holder 15 are sandwiched and fixed between the constituent parts of the inside terminal 4. Consequently, the same effect can be achieved as in the first and second embodiments.

### Fourth Embodiment

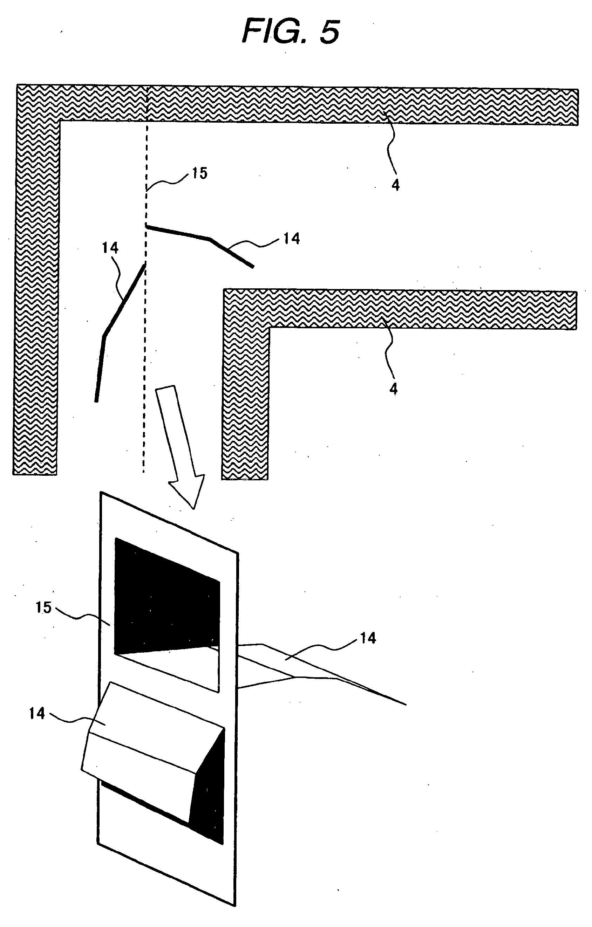

Fig. 5 also shows another structure of installing the guide vane 14. In this embodiment, the guide vane 14 is formed in a flat-shaped guide vane holder 15 by cutting and bending a plate for the holder 15 in addition to the same terminal 4 as in the comparative example 3. The guide vane 14 and the guide vane holder 15 are sandwiched and fixed between the constituent parts of the inside terminal 4. Consequently, the same effect can be achieved as in the first to third embodiments.

### Fifth Embodiment

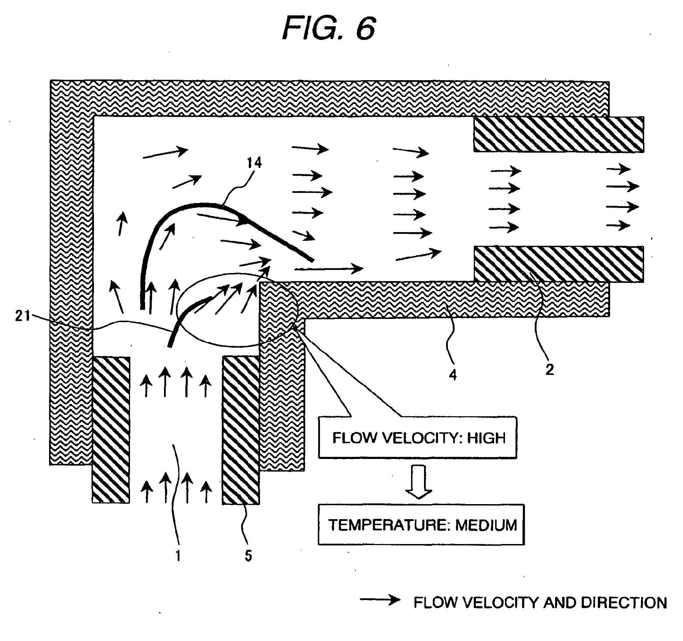

Fig. 6 shows a structure of installing an auxiliary guide vane 21 in addition to the guide vane 14. In the structures in the first to fourth embodiments where one guide vane 14 is attached, it is impossible for the cooling gas 1 to hit both the upstream side and downstream side of the inner corner of the inside terminal 4 . As a solution to this, in this embodiment, an auxiliary guide vane 21 is installed nearer to the inner corner than the guide vane 14 as shown in Fig. 6 so that the cooling gas 1 hits the upstream side of the inner corner of the inside terminal 4. Consequently the temperatures are decreased more than in the first to fourth embodiments.

### Sixth Embodiment

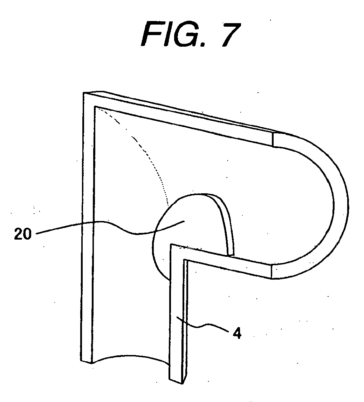

Fig. 7 shows a structure of installing a radiating fin 20. In the first to fifth embodiments, the cooling gas 1 hits the inner surface of the inner corner of the inside terminal 4. Mounting one or more radiating fins 20 on the inner corner of the inside terminal 4 as shown in Fig. 7 makes heat transfer area wider and therefore enables further decrease of the temperatures of the inner corner and its neighborhood.

### Seventh Embodiment

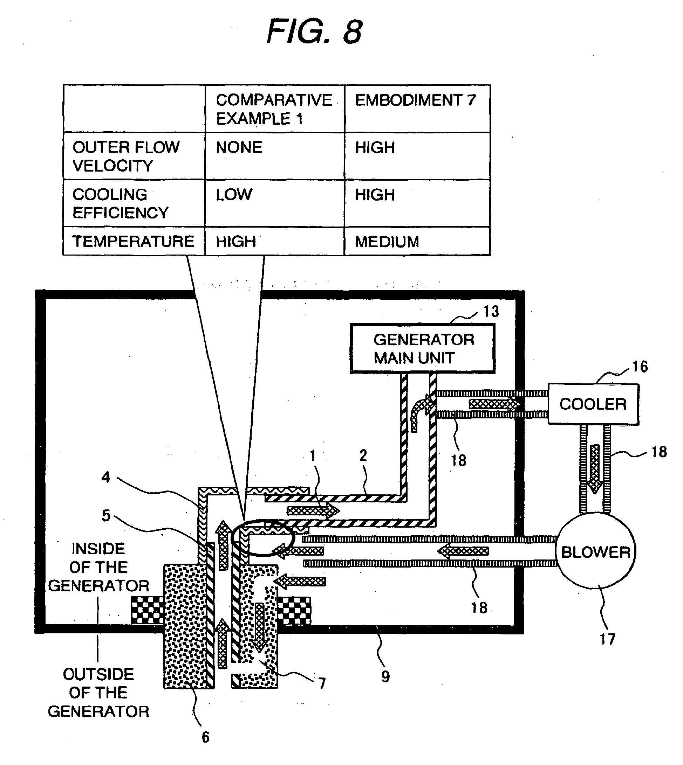

Fig. 8 shows a structure of the bushing and devices around it in the seventh embodiment. The present embodiment's structure has a similar cooling gas-circulating system to that of the comparative example 1. Namely, the circulating system comprises the blower duct 18, the ventilation hole 7, the conduit tube 5, the inside terminal 4, the inside lead tube 2 and the blower 17. A different technical point is that the downstream side of the blower duct 18 from the blower 17 is extended up to the immediate vicinity of the periphery of the inner corner of the inside terminal 4. Thereby the cooling gas 1 to be sent from the blower 17 to the bushing etc. is led to the inside terminal 4 through the circulating system, and the cooling gas 1 issued from an outlet of the blower duct 18 hits the outer surface of the inner corner of the inside terminal 4. Consequently the corner is cooled and the temperature increase is reduced.

### Eighth Embodiment

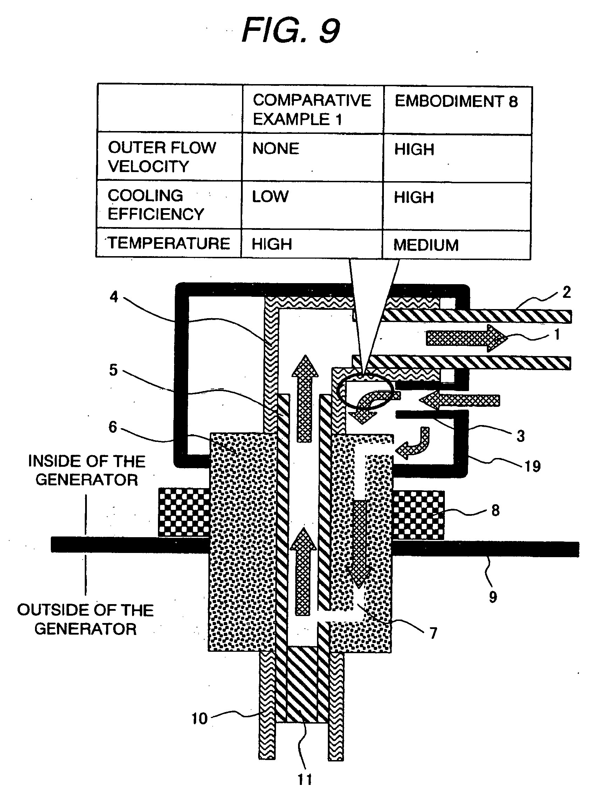

Fig. 9 shows a structure of the bushing and the devices around it in the eighth embodiment. Also the present embodiment's structure has a similar cooling gas-circulating system to that of the comparative example 1. A different technical point is as follows. An inside terminal cover 19 made of insulating material is attached so that it covers the inside terminal 4. The inside terminal cover 19 has a duct 3. An outlet of the duct 3 is positioned in the vicinity of the periphery of the inner corner of the inside terminal 4. Therefore, the cooling gas 1, which is sent from the blower 17 into the containment vessel 9, passes through the duct 3 of the inside terminal cover 19 to flow into the bushing. In this process, the cooling gas 1 hits the outer surface of the inner corner of the inside terminal 4 where much heat is generated. Consequently the corner is cooled and the temperature increase is reduced.

### Ninth Embodiment

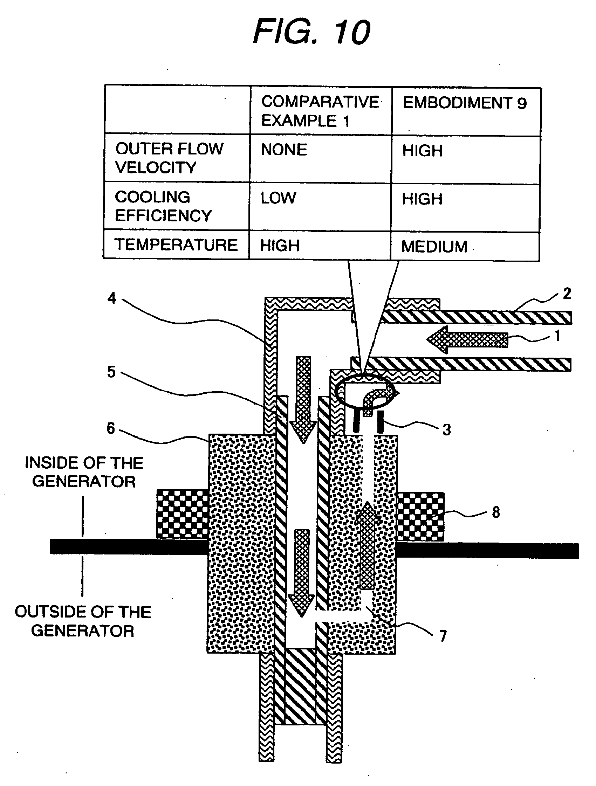

Fig. 10 shows another example of a structure of the bushing and the devices around it in the ninth embodiment. In this embodiment, the flow direction of the cooling gas 1 is reverse to that in the comparative examples 1 to 3 and the first to eighth embodiments. A duct 3 is attached to an outlet of the ventilation hole 7 so as to be directed to the periphery of the inner corner of the inside terminal 4. After the cooling gas 1 flows through the inside lead tube 2, the inside terminal 4 and the conduit tube 12, it flows out through the ventilation hole 7 in the insulation member 6 and is issued through the duct 3 so as to hit the outer surface of the inner corner of the inside terminal 4. Consequently the corner is cooled and the temperature increase is reduced.

### Tenth Embodiment

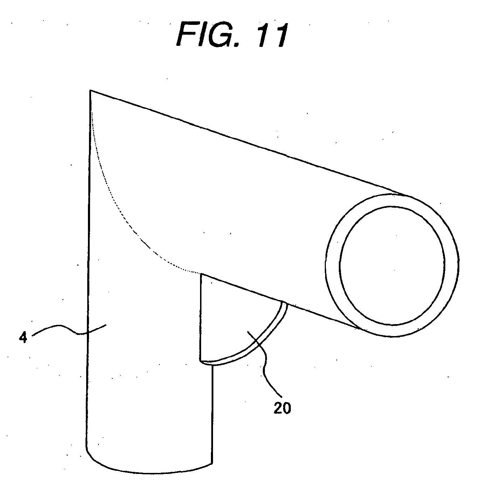

Fig. 11 shows a structure of attaching a radiating fin 20. In the seventh to ninth embodiments, the cooling gas 1 hits the outer surface of the inner corner of the inside terminal 4. Attaching one or more radiating fins 20 on the inner corner of the inside terminal 4 as shown in Fig. 11 makes heat transfer area wider and therefore enables further decrease of the temperatures of the inner corner and its neighborhood.

## Claims

1. A bushing comprising:
a conductive conduit tube (5);
a conductive lead tube (2); and
a tube type terminal (4) which connects the conduit tube and the lead tube;
wherein:
the terminal has a bend;
electric current flows through the conduit tube, the terminal and the lead tube; and
cooling gas (1) flows through the conduit tube, the terminal and the lead tube;
**characterised in that** the bushing further comprises a guide vane (14) as cooling means for forced cooling of an inner corner of the bend of the terminal, the guide vane being adapted to direct the cooling gas flowing through the terminal such as to come closer to the inner corner of the bend, and thus to concentrate it there.

2. A bushing according to claim 1, wherein at least two guide vanes (14) are provided on both upstream and downstream sides of the bend in a cooling gas flow direction, wherein the upstream guide vane is adapted to make the cooling gas (1) hit the upstream side of the inner corner and the downstream guide vane is adapted to make the cooling gas hit the downstream side of the inner corner.

3. A bushing comprising:
a conductive conduit tube (5);
a conductive lead tube (2); and
a tube type terminal (4) which connects the conduit tube and the lead tube;
wherein:
the terminal has a bend;
electric current flows through the conduit tube, the terminal and the lead tube; and
cooling gas (1) flows through the conduit tube, the terminal and the lead tube;
**characterised in that** the bushing further comprises a radiating fin (20) on an inner surface or an outer surface of the inner corner of the bend of the terminal as cooling means for forced cooling of an inner corner of the bend of the terminal.

4. A bushing
a conductive conduit tube (5);
a conductive lead tube (2); and
a tube type terminal (4) which connects the conduit tube and the lead tube; wherein:
the terminal has a bend;
electric current flows through the conduit tube, the terminal and the lead tube; and
cooling gas (1) flows through the conduit tube, the terminal and the lead tube;
**characterised in that** the bushing further comprises gas cooling means (14) for forced cooling of an inner corner of the bend of the terminal, the gas cooling means being configured to pass the cooling gas through a route of the conduit tube, the terminal and the lead tube, and to issue the cooling gas outside the route such as to forcedly cool the inner corner of the bend of the terminal with the cooling gas from outside.

5. The bushing according to claim 4, wherein the gas cooling means (14) make the cooling gas (1) hit an outer surface of the inner corner of the bend before or after the cooling gas is supplied to the conduit tube (5), the terminal (4), and the lead tube (2).

6. A generator comprising:
a generator main unit (13);
a containment vessel (9) to place the generator main unit in a cooling gas atmosphere;
a bushing which penetrates the containment vessel and enables electric current to flow to the generator main unit; and
a blower (17) and a gas cooler (16) adapted to feed cooling gas into the containment vessel and the bushing;
the bushing including
a conductive conduit tube (5);
a lead tube (2) to be connected with the generator main unit; and
a tube type terminal (4) which connects the conduit tube and the lead tube, and has a bend;
**characterised in that** the bushing further comprises a guide vane (14) as cooling means for forced cooling of an inner corner of the bend of the terminal, the guide vane being adapted to direct the cooling gas flowing through the terminal (4) such as to come closer to the inner corner of the bend, and thus to concentrate it there.

7. The generator according to claim 6, wherein at least two the guide vanes (14) are provided on both upstream and downstream sides of the bend in a cooling gas flow direction, wherein the upstream guide vane is adapted to make the cooling gas (1) hit the upstream side of the inner corner and the downstream guide vane is adapted to make the cooling gas hit the downstream side of the inner corner.

8. A generator comprising:
a generator main unit (13);
a containment vessel (9) to place the generator main unit in a cooling gas atmosphere;;
a bushing which penetrates the containment vessel and enables electric current to flow to the generator main unit; and
a blower (17) and a gas cooler (16) adapted to feed cooling gas into the containment vessel and the bushing;
the bushing including
a conductive conduit tube (5);
a lead tube (2) to be connected with the generator main unit; and
a tube type terminal (4) which connects the conduit tube and the lead tube, and has a bend;
**characterised in that** the bushing further comprises a radiating fin (20) on an inner surface or an outer surface of the inner corner of the bend of the terminal as cooling means for forced cooling of the inner corner of the bend of the terminal.

9. A generator comprising:
a generator main unit (13);
a containment vessel (9) to place the generator main unit in a cooling gas atmosphere;
a bushing which penetrates the containment vessel and enables electric current to flow to the generator main unit; and
a blower (17) and a gas cooler (16) adapted to feed cooling gas into the containment vessel and the bushing;
the bushing including
a conductive conduit tube (5);
a lead tube (2) to be connected with the generator main unit; and
a tube type terminal (4) which connects the conduit tube and the lead tube, and has a bend;
**characterised in that**
a part of the cooling gas supplied from the blower to the containment vessel is led into the conduit tube of the bushing and flows through the terminal and the lead tube into the gas cooler; and
a guide (14) adapted to direct the cooling gas supplied from the blower into the containment vessel so that the cooling gas hits an outer surface of the inner corner of the terminal is provided as the cooling means for forced cooling of the inner corner of the bend of the terminal.

## Patentansprüche

1. Buchse, umfassend:
eine leitende Leitröhre (5);
eine leitende Führungsröhre (2) und
einen röhrenartigen Anschluss (4), der die Leitröhre und die Führungsröhre verbindet;
wobei:
der Anschluss eine Biegung aufweist;
elektrischer Strom durch die Leitröhre, den Anschluss und die Führungsröhre fließt; und
Kühlgas (1) durch die Leitröhre, den Anschluss und die Führungsröhre strömt;
**gekennzeichnet dadurch, dass** die Buchse ferner einen Führungsteiler (14) als Kühleinrichtung zur erzwungenen Kühlung einer inneren Ecke der Biegung des Anschlusses umfasst, wobei der Führungsteiler dazu ausgelegt ist, das durch den Anschluss strömende Kühlgas so zu richten, dass es näher an die innere Ecke der Biegung gelangt, und es damit dort zu konzentrieren.

2. Buchse nach Anspruch 1, wobei mindestens zwei Führungsteiler (14) jeweils auf den Seiten stromaufwärts und stromabwärts der Biegung in einer Kühlgasströmungsrichtung vorgesehen sind, wobei der Führungsteiler stromaufwärts dazu ausgelegt ist, das Kühlgas (1) auf die stromaufwärtige Seite der inneren Ecke treffen zu lassen, und der Führungsteiler stromabwärts dazu ausgelegt ist, das Kühlgas auf die stromabwärtige Seite der inneren Ecke treffen zu lassen.

3. Buchse, umfassend:
eine leitende Leitröhre (5);
eine leitende Führungsröhre (2) und
einen röhrenartigen Anschluss (4), der die Leitröhre und die Führungsröhre verbindet;
wobei:
der Anschluss eine Biegung aufweist;
elektrischer Strom durch die Leitröhre, den Anschluss und die Führungsröhre fließt; und
Kühlgas (1) durch die Leitröhre, den Anschluss und die Führungsröhre strömt;
**gekennzeichnet dadurch, dass** die Buchse ferner eine Strahlungsrippe (20) an einer inneren Oberfläche oder einer äußeren Oberfläche der inneren Ecke der Biegung des Anschlusses als Kühlungseinrichtung zum erzwungenen Kühlen einer inneren Ecke der Biegung des Anschlusses umfasst.

4. Buchse, umfassend:
eine leitende Leitröhre (5);
eine leitende Führungsröhre (2) und
einen röhrenartigen Anschluss (4), der die Leitröhre und die Führungsröhre verbindet;
wobei:
der Anschluss eine Biegung aufweist;
elektrischer Strom durch die Leitröhre, den Anschluss und die Führungsröhre fließt; und
Kühlgas (1) durch die Leitröhre, den Anschluss und die Führungsröhre strömt;
**gekennzeichnet dadurch, dass** die Buchse ferner eine Gaskühleinrichtung (14) zum erzwungenen Kühlen einer inneren Ecke der Biegung des Anschlusses umfasst, wobei die Gaskühleinrichtung dazu eingerichtet ist, das Kühlgas über einen Weg der Leitröhre, des Anschlusses und der Führungsröhre passieren zu lassen und das Kühlgas außerhalb des Wegs auszulassen, um so die Kühlung der inneren Ecke der Biegung des Anschlusses mit dem Kühlgas von außen zu erzwingen.

5. Buchse nach Anspruch 4, wobei die Gaskühleinrichtung (14) das Kühlgas (1) auf eine äußere Oberfläche der inneren Ecke der Biegung treffen lässt, bevor oder nachdem das Kühlgas der Leitröhre (5), dem Anschluss (4) und der Führungsröhre (2) zugeführt wird.

6. Generator, umfassend:
eine Generatorhaupteinheit (13);
ein Aufnahmegefäß (9) zum Plazieren der Generatorhaupteinheit in einer Kühlgasumgebung;
eine Buchse, die das Aufnahmegefäß durchdringt und das Fließen elektrischen Stroms zur Generatorhaupteinheit ermöglicht; und
ein Gebläse (17) und einen Gaskühler (16), die dazu ausgelegt sind, Kühlgas in das Aufnahmegefäß und die Buchse zu führen;
wobei die Buchse enthält
eine leitende Leitröhre (5);
eine mit der Generatorhaupteinheit zu verbindende Führungsröhre (2) und
einen röhrenartigen Anschluss (4), der die Leitröhre und die Führungsröhre verbindet und eine Biegung aufweist;
**gekennzeichnet dadurch, dass** die Buchse ferner einen Führungsteiler (14) als Kühleinrichtung zur erzwungenen Kühlung einer inneren Ecke der Biegung des Anschlusses umfasst, wobei der Führungsteiler dazu ausgelegt ist, das durch den Anschluss (4) strömende Kühlgas so zu richten, dass es näher an die innere Ecke der Biegung gelangt und es damit dort zu konzentrieren.

7. Generator nach Anspruch 6, wobei mindestens zwei Führungsteiler (14) jeweils auf den Seiten stromaufwärts und stromabwärts der Biegung in einer Kühlgasströmungsrichtung vorgesehen sind, wobei der Führungsteiler stromaufwärts dazu ausgelegt ist, das Kühlgas (1) auf die stromaufwärtige Seite der inneren Ecke treffen zu lassen, und der Führungsteiler stromabwärts dazu ausgelegt ist, das Kühlgas auf die stromabwärtige Seite der inneren Ecke treffen zu lassen.

8. Generator, umfassend:
eine Generatorhaupteinheit (13);
ein Aufnahmegefäß (9) zum Plazieren der Generatorhaupteinheit in einer Kühlgasumgebung;
eine Buchse, die das Aufnahmegefäß durchdringt und das Fließen elektrischen Stroms zur Generatorhaupteinheit ermöglicht; und
ein Gebläse (17) und einen Gaskühler (16), die dazu ausgelegt sind, Kühlgas in das Aufnahmegefäß und die Buchse zu führen;
wobei die Buchse enthält
eine leitende Leitröhre (5);
eine mit der Generatorhaupteinheit zu verbindende Führungsröhre (2) und
einen röhrenartigen Anschluss (4), der die Leitröhre und die Führungsröhre verbindet und eine Biegung aufweist;
**gekennzeichnet dadurch, dass** die Buchse ferner eine Strahlungsrippe (20) an einer inneren Oberfläche oder einer äußeren Oberfläche der inneren Ecke der Biegung des Anschlusses als Kühleinrichtung zum erzwungenen Kühlen der inneren Ecke der Biegung des Anschlusses umfasst.

9. Generator, umfassend:
eine Generatorhaupteinheit (13);
ein Aufnahmegefäß (9) zum Plazieren der Generatorhaupteinheit in einer Kühlgasumgebung;
eine Buchse, die das Aufnahmegefäß durchdringt und das Fließen elektrischen Stroms zur Generatorhaupteinheit ermöglicht; und
ein Gebläse (17) und einen Gaskühler (16), die dazu ausgelegt sind, Kühlgas in das Aufnahmegefäß und die Buchse zu führen;
wobei die Buchse enthält
eine leitende Leitröhre (5);
eine mit der Generatorhaupteinheit zu verbindende Führungsröhre (2) und
einen röhrenartigen Anschluss (4), der die Leitröhre und die Führungsröhre verbindet und eine Biegung aufweist;
**gekennzeichnet dadurch, dass**
ein Teil des dem Aufnahmegefäß vom Gebläse zugeführten Kühlgases in die Leitröhre der Buchse geführt wird und durch den Anschluss und die Führungsröhre in den Gaskühler strömt; und
eine Führung (14), die dazu ausgelegt ist, das dem Aufnahmegefäß vom Gebläse zugeführte Kühlgas so zu richten, dass das Kühlgas auf eine äußere Oberfläche der inneren Ecke des Anschlusses trifft, als die Kühleinrichtung zum erzwungenen Kühlen der inneren Ecke der Biegung des Anschlusses vorgesehen ist.

## Revendications

1. Traversée comprenant:
un tube de conduit conducteur (5);
un tube de tête conducteur (2); et
une borne de type à tube (4) qui raccorde le tube de conduit et le tube de tête;
dans laquelle:
la borne a un coude;
du courant électrique circule à travers le tube de conduit, la borne et le tube de tête; et
du gaz de refroidissement (1) s'écoule à travers le tube de conduit, la borne et le tube de tête;
**caractérisée en ce que** la traversée comprend en outre une pale de guidage (14) en tant que moyens de refroidissement pour le refroidissement forcé d'un coin interne du coude de la borne, la pale de guidage étant adaptée pour diriger le gaz de refroidissement s'écoulant à travers la borne en rapprochement du coin interne du coude, et donc le concentrer à cet endroit.

2. Traversée selon la revendication 1, dans laquelle au moins deux pales de guidage (14) sont prévues à la fois sur les côtés en amont et en aval du coude dans une direction d'écoulement de gaz de refroidissement, dans laquelle la pale de guidage en amont est adaptée pour que le gaz de refroidissement (1) heurte le côté en amont du coin interne et la pale de guidage en aval est adapté pour que le gaz de refroidissement heurte le côté en aval du coin interne.

3. Traversée comprenant:
un tube de conduit conducteur (5);
un tube de tête conducteur (2); et
une borne de type à tube (4) qui raccorde le tube de conduit et le tube de tête;
dans laquelle:
la borne a un coude;
du courant électrique circule à travers le tube de conduit, la borne et le tube de tête; et
du gaz de refroidissement (1) s'écoule à travers le tube de conduit, la borne et le tube de tête;
**caractérisée en ce que** la traversée comprend en outre une ailette de rayonnement (20) sur une surface interne ou une surface externe du coin interne du coude de la borne en tant que moyens de refroidissement pour le refroidissement forcé d'un coin interne du coude de la borne.

4. Traversée
un tube de conduit conducteur (5);
un tube de tête conducteur (2); et
une borne de type à tube (4) qui raccorde le tube de conduit et le tube de tête;
dans laquelle:
la borne a un coude;
du courant électrique circule à travers le tube de conduit, la borne et le tube de tête; et
du gaz de refroidissement (1) s'écoule à travers le tube de conduit, la borne et le tube de tête;
**caractérisée en ce que** la traversée comprend en outre des moyens de refroidissement de gaz (14) pour le refroidissement forcé d'un coin interne du coude de la borne, les moyens de refroidissement de gaz étant configurés pour faire passer le gaz de refroidissement par une voie du tube de conduit, de la borne et du tube de tête, et pour faire sortir le gaz de refroidissement à l'extérieur de la voie afin de refroidir de force le coin interne du coude de la borne avec le gaz de refroidissement de l'extérieur.

5. Traversée selon la revendication 4, dans laquelle les moyens de refroidissement de gaz (14) amènent le gaz de refroidissement (1) à heurter une surface externe du coin interne du coude avant ou après que le gaz de refroidissement a été amené au tube de conduit (5), à la borne (4) et au tube de tête (2).

6. Générateur comprenant:
une unité principale de générateur (13);
un récipient de confinement (9) pour placer l'unité principale de générateur dans une atmosphère de gaz de refroidissement;
une traversée qui pénètre dans le récipient de confinement et permet au courant électrique de circuler vers l'unité principale de générateur; et
une soufflante (17) et un refroidisseur de gaz (16) adaptés pour amener le gaz de refroidissement dans le récipient de confinement et la traversée;
la traversée comprenant:
un tube de conduit conducteur (5);
un tube de tête (2) à raccorder avec l'unité principale de générateur; et
une borne de type à tube (4) qui raccorde le tube de conduit et le tube de tête, et a un coude;
**caractérisé en ce que** la traversée comprend en outre une pale de guidage (14) en tant que moyens de refroidissement pour le refroidissement forcé d'un coin interne du coude de la borne, la pale de guidage étant adaptée pour diriger le gaz de refroidissement s'écoulant à travers la borne (4) afin de se rapprocher du coin interne du coude, et le concentrer ainsi à cet endroit.

7. Générateur selon la revendication 6, dans lequel au moins deux pales de guidage (14) sont prévues à la fois sur les côtés en amont et en aval du coude dans une direction d'écoulement de gaz de refroidissement, dans lequel la pale de guidage en amont est adaptée pour que le gaz de refroidissement (1) heurte le côté en amont du coin interne et la pale de guidage en aval est adaptée pour que le gaz de refroidissement heurte le côté en aval du coin interne.

8. Générateur comprenant:
une unité principale de générateur (13);
un récipient de confinement (9) pour placer l'unité principale de générateur dans une atmosphère de gaz de refroidissement;
une traversée qui pénètre dans le récipient de confinement et permet au courant électrique de circuler vers l'unité principale de générateur; et
une soufflante (17) et un refroidisseur de gaz (16) adaptés pour amener le gaz de refroidissement dans le récipient de confinement et la traversée;
la traversée comprenant:
un tube de conduit conducteur (5);
un tube de tête conducteur (2) à raccorder à l'unité principale de générateur; et
une borne de type à tube (4) qui raccorde le tube de conduit et le tube de tête et a un coude;
**caractérisée en ce que** la traversée comprend en outre une ailette de rayonnement (20) sur une surface interne ou une surface externe du coin interne du coude de la borne en tant que moyens de refroidissement pour le refroidissement forcé du coin interne du coude de la borne.

9. Générateur comprenant:
une unité principale de générateur (13);
un récipient de confinement (9) pour placer l'unité principale de générateur dans une atmosphère de gaz de refroidissement;
une traversée qui pénètre dans le récipient de confinement et permet au courant électrique de circuler vers l'unité principale de générateur; et
une soufflante (17) et un refroidisseur de gaz (16) adaptés pour amener du gaz de refroidissement dans le récipient de confinement et la traversée;
la traversée comprenant:
un tube de conduit conducteur (5);
un tube de tête (2) à raccorder à l'unité principale de générateur; et
une borne de type à tube (4) qui raccorde le tube de conduit et le tube de tête et a un coude;
**caractérisée en ce que**:
une partie du gaz de refroidissement amené de la soufflante au récipient de confinement est amenée dans le tube de conduit de la traversée et s'écoule à travers la borne et le tube de tête dans le refroidisseur de gaz; et
un guide (14) adapté pour diriger le gaz de refroidissement amené de la soufflante dans le récipient de confinement de sorte que le gaz de refroidissement heurte une surface externe du coin interne de la borne, est prévu en tant que moyens de refroidissement pour le refroidissement forcé du coin interne du coude de la borne.
